# EUROPEAN PATENT SPECIFICATION

(11) **EP 3 422 818 B1**
(45) Date of publication and mention of the grant of the patent: **23.12.2020**
(21) Application number: 18180498.0
(22) Date of filing: 28.06.2018
(51) Int. Cl.: H05B 45/20

(54) **METHOD AND APPARATUS FOR CONTROLLING SMART FLASHLIGHT AND SMART DEVICE**
VERFAHREN UND VORRICHTUNG ZUR STEUERUNG EINER INTELLIGENTEN TASCHENLAMPE UND INTELLIGENTE VORRICHTUNG
PROCÉDÉ ET APPAREIL PERMETTANT DE COMMANDER UNE LAMPE DE POCHE INTELLIGENTE ET UN DISPOSITIF INTELLIGENT

(30) Priority: 30.06.2017 CN 201710525257
(43) Date of publication of application: 02.01.2019
(73) Proprietor: Beijing Xiaomi Mobile Software Co., Ltd., Beijing 100085 (CN)
(72) Inventor: XIE, Yan, Beijing, Beijing 100085 (CN)
(74) Representative: dompatent von Kreisler Selting Werner - Partnerschaft von Patent- und Rechtsanwälten mbB

(56) References cited:
- EP-A1- 2 947 371
- WO-A2-2016/173914
- US-A1- 2017 051 903

## Description

### FIELD

The present disclosure relates to a field of smart appliance technology, and more particularly, to a method and an apparatus for controlling a smart flashlight and a smart device.

### BACKGROUND

It is easy to get lost when a user walks on an unfamiliar road or in the open country without sufficient landmarks at night, leading to a potential safety risk for the user and delaying the user's journey.

In related arts, a lot of smart devices are equipped with a compass function. However, in a case of low light at night, it is inconvenient for the user to check the compass again and again. For example, the user may not concentrate on the road condition, and content of the compass cannot be seen clearly due to the low light.

In EP 2 947 371 A1a lighting device comprises an output controlling system for operating output means of the lighting device so as to control output emitted by the output means; wherein depending on the position of the lighting device detected by the position detection system, the output controlling system is provided to operate the output means such that a predetermined output is emitted.

US 2017/0051903 A1 discloses a multi-mode flashlight including a switch and at least two icons, each of which is associated with a mode of operation of the flashlight, wherein the mode of operation is selected by orienting the housing so that the icon associated with the desired mode of operation is positioned in a predetermined manner and the switch is depressed to turn the flashlight on and the switch is depressed for at least a predetermined amount of time.

### SUMMARY

In order to overcome problems in the related art, embodiments of the present disclosure provide a method and an apparatus for controlling a smart flashlight and a smart device according to the independent claims, and the preferable features according to the present invention are defined in the dependent claims.

According to a first aspect of embodiments of the present disclosure, there is provided a method for controlling a smart flashlight. The method includes: determining a present moving direction when the smart flashlight is in a preset mode; reading a pre-stored relationship between moving directions and illumination configurations to determine a present illumination configuration corresponding to the present moving direction; and illuminating according to the present illumination configuration.

In an embodiment, reading a pre-stored relationship between moving directions and illumination configurations to determine a present illumination configuration corresponding to the present moving direction includes reading a pre-stored relationship between moving directions and colors of light to determine a present color of light corresponding to the present moving direction. Illuminating according to the present illumination configuration includes illuminating using the present color of light.

In an embodiment, reading a pre-stored relationship between moving directions and illumination configurations to determine a present illumination configuration corresponding to the present moving direction includes reading a pre-stored relationship between moving directions and colors of light and a pre-stored relationship between moving directions and strobe frequencies to determine a present color of light and a present strobe frequency corresponding to the present moving direction. Illuminating according to the present illumination configuration includes illuminating using the present color of light and the present strobe frequency.

In an embodiment, reading a pre-stored relationship between moving directions and illumination configurations to determine a present illumination configuration corresponding to the present moving direction includes reading a pre-stored relationship between moving directions and colors of light and a pre-stored relationship between moving directions and light brightness to determine a present color of light and a present light brightness corresponding to the present moving direction. Illuminating according to the present illumination configuration includes illuminating using the present color of light and the present light brightness.

In an embodiment, the method further includes when the moving direction is determined to deviate from the present moving direction, determining a next moving direction; reading the pre-stored relationship between the moving directions and the illumination configurations to determine a next illumination configuration corresponding to the next moving direction; and illuminating according to the next illumination configuration.

In an embodiment, the method further includes detecting an operation by a user of the smart device to select one of working modes of the smart device; and when the one of working modes is the preset mode, activating the preset mode.

In an embodiment, the method further includes determining whether a present time associated with the smart device reaches a preset time; and when the present time reaches the preset time, activating the preset mode.

According to a second aspect of embodiments of the present disclosure, there is provided a device for controlling a smart flashlight. The apparatus may include: a first determining module, configured to determine a present moving direction when the smart flashlight is in a preset mode; a first reading module, configured to read a pre-stored relationship between moving directions and illumination configurations to determine a present illumination configuration corresponding to the present moving direction; and an illuminating module, configured to illuminate according to the present illumination configuration.

In an embodiment, the first reading module includes a first reading sub-module, configured to read a pre-stored relationship between moving directions and colors of light to determine a present color of light corresponding to the present moving direction. The illuminating module includes a first illuminating sub-module, configured to illuminate using the present color of light.

In an embodiment, the first reading module includes a second reading sub-module, configured to read a pre-stored relationship between moving directions and colors of light and a pre-stored relationship between moving directions and strobe frequencies to determine a present color of light and a present strobe frequency corresponding to the present moving direction. The illuminating module includes a second illuminating sub-module, configured to illuminate using the present color of light and the present strobe frequency.

In an embodiment, the first reading module includes a third reading sub-module, configured to read pre-stored relationship between moving directions and colors of light and a pre-stored relationship between moving directions and light brightness to determine a present color of light and a present light brightness corresponding to the present moving direction. The illuminating module includes a third illuminating sub-module, configured to illuminate using the present color of light and the present light brightness.

In an embodiment, the device further includes a second determining module, configured to determine a next moving direction when the moving direction is determined to deviate from the present moving direction; a second reading module, configured to read the pre-stored relationship between the moving directions and the illumination configurations to determine a next illumination configuration corresponding to the next moving direction; and an adjusting module, configured to illuminate according to the next illumination configuration.

In an embodiment, the device further includes a detecting module, configured to detect an operation by a user of the smart device to select one of working modes of the smart device; and a first mode module, configured to activate the preset mode when the one of working modes is the preset mode.

In an embodiment, the device further includes a third determining module, configured to determine whether a present time associated with the smart device reaches a preset time; and a second mode module, configured to activate the preset mode when the present time reaches the preset time.

According to a third aspect of embodiments of the present disclosure, there is provided a smart device. The smart device may include: a processor; a memory configured to store an instruction executable by the processor; in which the processor is configured to: determine a current moving direction in a preset mode; read a pre-stored correspondence between a direction and an illuminating manner, and to determine an illuminating manner corresponding to the current moving direction; and illuminate in the illuminating manner determined.

According to a fourth aspect of embodiments of the present disclosure, there is provided a computer readable storage medium having computer programs stored thereon, in which the computer programs are executed to perform acts of: determining a present moving direction when the smart flashlight is in a preset mode; reading a pre-stored relationship between moving directions and illumination configurations to determine a present illumination configuration corresponding to the present moving direction; and illuminating according to the present illumination configuration.

According to the embodiments of the present disclosure, the technical solution may include the following advantageous effects.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1A is a flow chart of a method for controlling a smart flashlight according to an embodiment of the disclosure;
Fig. 1B is a schematic diagram illustrating a scene in which a method for controlling a smart flashlight is applied according to an embodiment of the disclosure;
Fig. 2A is a flow chart of a method for controlling a smart flashlight according to an embodiment of the disclosure;
Fig. 2B is a schematic diagram illustrating a scene in which a method for controlling a smart flashlight is applied according to an embodiment of the disclosure;
Fig. 3 is a flow chart of a method for controlling a smart flashlight according to an embodiment of the disclosure;
Fig. 4 is a flow chart of a method for controlling a smart flashlight according to an embodiment of the disclosure;
Fig. 5 is a flow chart of a method for controlling a smart flashlight according to an embodiment of the disclosure;
Fig. 6 is a flow chart of a method for controlling a smart flashlight according to an embodiment of the disclosure;
Fig. 7 is a block diagram of an apparatus for controlling a smart flashlight according to an embodiment of the disclosure;
Fig. 8 is a block diagram of an apparatus for controlling a smart flashlight according to an embodiment of the disclosure;
Fig. 9 is a block diagram of an apparatus for controlling a smart flashlight according to an embodiment of the disclosure;
Fig. 10 is a block diagram of an apparatus for controlling a smart flashlight according to an embodiment of the disclosure;
Fig. 11 is a block diagram of an apparatus for controlling a smart flashlight according to an embodiment of the disclosure;
Fig. 12 is a block diagram of an apparatus for controlling a smart flashlight according to an embodiment of the disclosure;
Fig. 13 is a block diagram of an apparatus for controlling a smart flashlight according to an embodiment of the disclosure; and
Fig. 14 is a block diagram of a control device applicable to a smart flashlight according to an embodiment of the disclosure.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Terms used in the application are intended not to limit the application but only to describe specific embodiments. "A", "said" and "the" used in a singular form in the application and the appended claims are also intended to include a plural form, unless other meanings are clearly represented in the context. It should also be understood that term "and/or" used in the present disclosure refers to and includes any or all possible combinations of one or more associated items which are listed.

It should be understood that, although terms first, second, third and the like may be adopted to describe various kinds of information in the application, the information should not be limited to these terms. These terms are only adopted to distinguish information of the same type. For example, without departing from the scope of the application, first information may also be called as second information, and similarly, second information may also be called as first information. It depends on the context. For example, word "if' used herein may be explained to be "while" or "when" or "in response to determination".

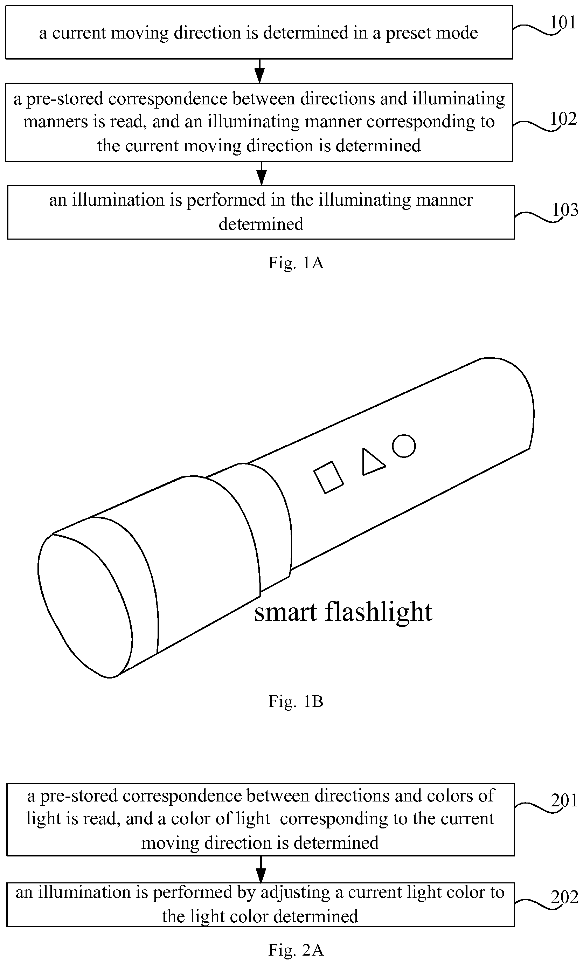

Fig. 1A is a flow chart of a method for controlling a smart flashlight according to an example embodiment. Fig. 1B is a schematic diagram illustrating a scene in which a method for controlling a smart flashlight is applied according to an example embodiment. The method for controlling a smart flashlight may be applied to the smart flashlight. The smart flashlight described herein has a compass function.

The compass function may be implemented by an electronic compass or an anti-interference electronic compass consisting of the electronic compass, a gravity accelerometer and a gyroscope. The compass function has been applied to a smart phone widely, the implementation principle of which will not be described herein. The anti-interference electronic compass consisting of the electronic compass, the gravity accelerometer and the gyroscope has a strong capacity of resisting interference and is sensitive to a direction changing. Alternatively, the compass function may be realized in a smart flashlight according to a real compass. Therefore, those skilled in the art may understand that any implementation for realizing the compass function falls into the scope of the present disclosure.

Referring to Fig. 1A, the method for controlling the smart flashlight may include followings.

At step 101, a current moving direction (or a present moving direction) is determined in a preset mode (or a first working mode). In an example, a directional signal indicative of the current moving direction of the smart flashlight is determined in the preset mode, for example, by processing circuitry of the smart flashlight.

In an embodiment, the smart flashlight may determine the current moving direction such as north, east, south, west, southeast and northwest via a self-contained compass function in a preset mode.

In an embodiment, the preset mode may be selected by the user via a setting function of the smart flashlight.

In an embodiment, the smart flashlight may have time function and date function, in which a time threshold may be preset. For example, in summer, the time threshold may be set as 20:00, in spring and autumn, the time threshold may be set as 19:00, and in winter, the time threshold may be set as 18:00. Once the time threshold is reached, the preset mode is activated automatically. For example, in summer, once the time point 20:00 is passed, the preset mode is activated automatically.

At step 102, a pre-stored correspondence (or a pre-defined relationship) between directions (or moving directions) and illuminating manners (or illumination configurations) is read, and an illuminating manner corresponding to the current moving direction is determined. In an example, a present illuminating manner corresponding to the current moving direction can be determined by the processing circuitry of the smart flashlight based on a pre-stored relationship between the direction and the illuminating manner. In an example, the pre-stored relationship can be stored in memory of the smart flashlight.

In an embodiment, the illuminating manner may include a color of light (or a light wavelength). Different directions correspond to different colors. For example, east corresponds to yellow, west corresponds to cyan, south corresponds to green and north corresponds to red. Further, the direction may be divided. Southeast corresponds to olivine, southwest corresponds to blue, northeast corresponds to orange and northwest corresponds to violet. The colors of light corresponding to each direction may be personalized, such as based on personal preference and habit.

In an embodiment, the illuminating manner may include a brightness of light (or a light brightness) such as high light and medium light. In addition, the color and the brightness of light may be combined. For example, east may correspond to the color of red and the brightness of medium light.

In an embodiment, the illuminating manner may include a lighting manner such as high-frequency flashing, low-frequency flashing and the like. In an example, the lighting manner can be strobe lighting at a strobe frequency. In addition, the color of light and the lighting manner may be combined. For example, east may correspond to the color of red and the lighting manner of low-frequency flashing.

At step 103, an illumination is performed in the illuminating manner determined. In an example, the illumination is performed according to the determined illumination configuration.

In an embodiment, the smart flashlight illuminates in the illuminating manner determined at last step. For example, when the current moving direction is east, the color of the light emitted by the smart flashlight is adjusted to red.

In an example scene, as shown in Fig. 1B, take a smart flashlight configured with a compass as an example. The smart flashlight configured as a smart device is included in the scene shown in Fig. 1B, in which the smart flashlight is configured with a compass.

The smart flashlight reads time information, which is 20:01 on June 22, 2017. After that, the smart flashlight reads the time threshold, which is 20:00. The current time is beyond the time threshold, the preset mode is activated, and the compass function of the smart flashlight is enabled. The current moving direction is determined as southwest, the pre-stored correspondence between the directions and the colors of light is read and it is determined that southwest corresponds to the color of yellow, such that the color of the current light is adjusted as yellow.

In an embodiment, the method for controlling the smart flashlight may further include: when the current moving direction is changed, determining a changed direction; determining an illuminating manner corresponding to the changed direction; and adjusting a current illuminating manner to the illuminating manner corresponding to the changed direction.

In an embodiment, the method for controlling the smart flashlight may further include: when the current moving direction is changed, outputting a speech prompt (or an audio signal) to prompt the user that the current moving direction is changed.

Regarding the specific manner for controlling the smart flashlight, reference can be made to following embodiments.

Therefore, with the method for controlling the smart flashlight described in embodiments of the present disclosure, in a case of low light, the illumination function may be provided to the user and a direction can be directed for the user at the same time. Once the direction deviates from the original direction, the illuminating manner may be changed to prompt the user to adjust the moving direction in time, such that the user needs not to check a compass frequently, thereby avoiding getting lost and providing a convenient and optimized solution.

Technical solutions provided by embodiments of the present disclosure will be described in detail below with reference to specific embodiments.

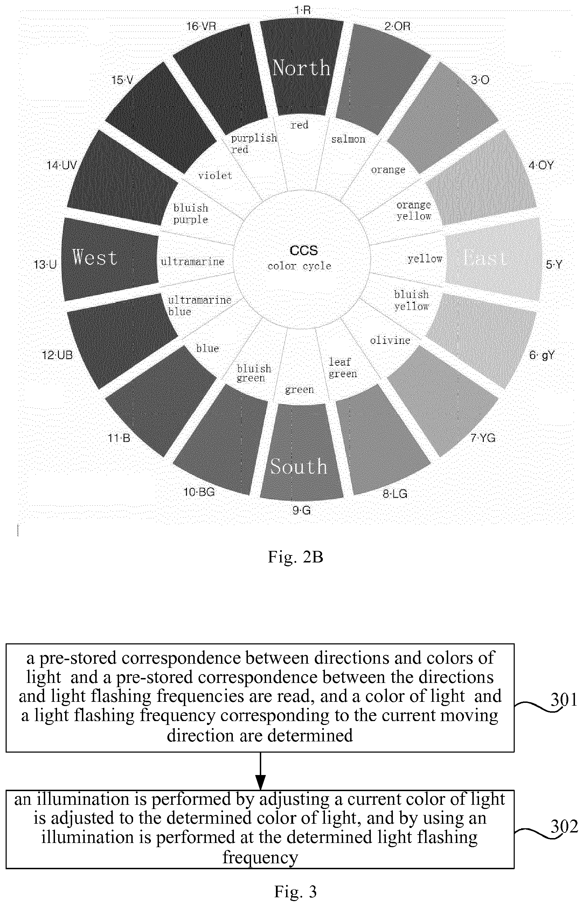

Fig. 2A is a flow chart of a method for controlling a smart flashlight according to another example embodiment. Based on the method provided by the above embodiments of the present disclosure, this embodiment is discussed exemplarily by taking a process of determining an illuminating manner corresponding to the current direction by reading a pre-stored correspondence between the direction and the illuminating manner will be discussed as an example and referring to Fig. 2B. As shown in Fig. 2A, the method may include followings.

At step 201, a pre-stored correspondence between directions and colors of light is read, and a color of light corresponding to the current moving direction is determined.

In an embodiment, the pre-stored correspondence between the directions and the colors of light is stored in the smart flashlight. For example, east may correspond to yellow, southwest may correspond to blue, north may correspond to red and so on as shown in Fig. 2B. The smart flashlight is able to determine the color of light corresponding to the current direction by checking the pre-stored correspondence based on the current moving direction.

At step 202, an illumination is performed by adjusting a current light color to the determined color of light.

In an embodiment, if the current color of light is different from the determined color of light, the current color of light is adjusted to the determined color of light. If the current color of light is same as the determined color of light, no adjustment needs to be made on the current color of light.

In an example scene, as shown in Fig. 2B, the direction may be divided into 16 directions corresponding respectively to different colors. For example, when the current moving direction is east, the color corresponding to east is determined as yellow, and when the current moving direction is south, the color corresponding to south is determined as green, such that the color of light may be changed when the current moving direction is changed.

In this embodiment, by implementing acts 201-202, the color of light corresponding to the current moving direction can be determined according to the preset correspondence between the directions and the colors of light, such that when the moving direction is changed, the color of light can be changed in time, so as to provide an accurate prompt to the user for preventing the user from going in a wrong direction or getting lost.

Fig. 3 is a flow chart of a method for controlling a smart flashlight according to yet another example embodiment. Based on the method provided by the above embodiments of the present disclosure, this embodiment will be discussed exemplarily by taking a process of determining an illuminating manner corresponding to the current moving direction by reading a pre-stored correspondence between the directions and the illuminating manners as an example. As shown in Fig. 3, the method may include followings.

At step 301, a pre-stored correspondence between directions and colors of light and a pre-stored correspondence between the directions and light flashing frequencies (or strobe frequencies) are read, and a color of light and a light flashing frequency corresponding to the current moving direction are determined. Alternatively, at step 301, in an example, a pre-stored correspondence between the direction and the illuminating manner including a color of light and a light flashing frequency is read, and a color of light and a light flashing frequency corresponding to the current moving direction are determined.

In an embodiment, based on the above embodiments, the light flashing frequency is defined besides the color of light. For example, east may correspond to low-frequency flashing and red, southwest may correspond to high-frequency flashing and yellow, north may correspond to a low-frequency flashing and blue, and so on. In other words, the correspondence between the directions and the light flashing frequencies is presorted, and the color of light and the light flashing frequency corresponding to the current moving direction is determined based on the pre-stored correspondences.

At step 302, an illumination is performed by adjusting a current color of light to the determined color of light and by using the determined light flashing frequency.

In this embodiment, by implementing the above acts 301-302, the color of light and the light flashing frequency corresponding to the current moving direction is determined based on the preset correspondence between the directions and the colors of light as well as that between the directions and the light flashing frequencies, such that when the moving direction is changed, the color of light and the light flashing frequency may be changed in time to prompt the user precisely and clearly, thereby avoiding going a wrong way or even getting lost.

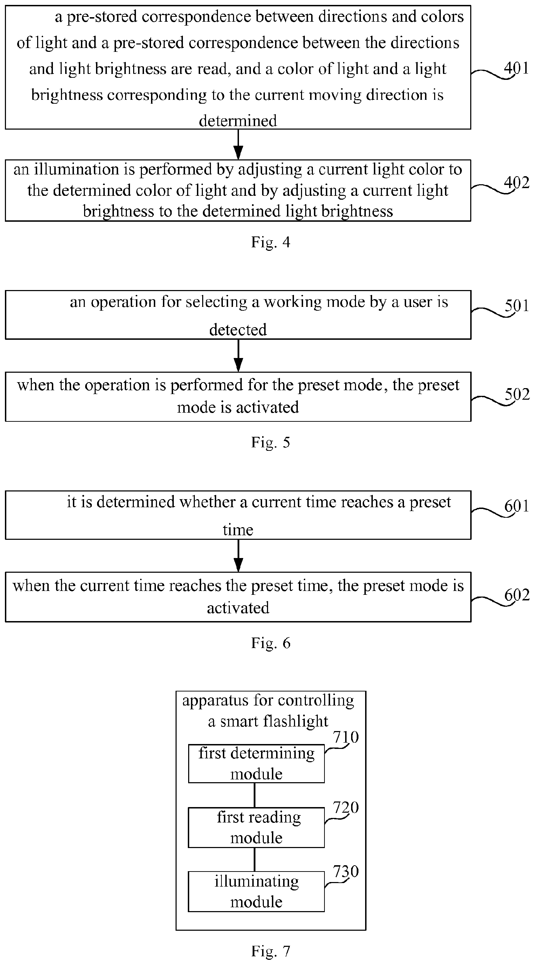

Fig. 4 is a flow chart of a method for controlling a smart flashlight according to still another example embodiment. Based on the method provided by the above embodiments of the present disclosure, this embodiment is discussed by taking a process of determining an illuminating manner corresponding to the current direction by reading a pre-stored correspondence between the directions and the illuminating manners as an example. As shown in Fig. 4, the method may include followings.

At step 401, a pre-stored correspondence between directions and colors of light and a pre-stored correspondence between the directions and light brightness are read, and a color of light and a light brightness corresponding to the current moving direction is determined. Alternatively, at step 401, in an example, a pre-stored correspondence between the direction and the illuminating manner including a color of light and a light brightness is read, and a color of light and a light brightness corresponding to the current moving direction is determined.

In an embodiment, the correspondence between the directions and the colors of light as well as that between the directions and the light brightness are pre-stored in the smart flashlight. For example, east may correspond to high-brightness red, southwest may correspond to mid-brightness yellow, north may correspond to low-brightness blue and so on. The smart flashlight is able to determine the color of light and the light brightness corresponding to the current moving direction by checking the pre-stored correspondences based on the current moving direction.

At step 402, an illumination is performed by adjusting a current color of light to the determined color of light and by adjusting a current light brightness to the determined light brightness.

In this embodiment, by implementing the above acts 401-402, the color of light and the light brightness corresponding to the current moving direction can be determined based on the preset correspondence between the directions and the colors of light as well as that between the directions and the light brightness, such that when the moving direction is changed, the color of light and the light brightness may be changed in time to prompt the user precisely and clearly, thereby avoiding going a wrong way or even getting lost.

Fig. 5 is a flow chart of a method for controlling a smart flashlight according to yet still another example embodiment. Based on the method provided by the above embodiments of the present disclosure, this embodiment is discussed by taking a process of activating the preset mode as an example. As shown in Fig. 5, the method may include followings.

At step 501, an operation for selecting a working mode by a user is detected.

In an embodiment, there are many working modes set in the smart flashlight. For example, in a case of high light in the daytime, it may be unnecessary to start a flashlight, which may be considered as a working mode. Embodiments of the present disclosure focus on a case of low light, for example at night, this mode refers to a preset mode in the present disclosure.

At step 502, when the operation is performed for the preset mode, the preset mode is activated.

In an embodiment, a plurality of buttons may be set on the smart flashlight, corresponding to different working modes. When the operation for selecting a working mode by the user is detected and the operation corresponds to the preset mode, the preset mode is activated.

In this embodiment, by implementing the acts 501-502, the user may perform an operation for selecting a working mode to activate or activate the corresponding working mode, which is simple and convenient, thereby providing a better experience for the user.

Fig. 6 is a flow chart of a method for controlling a smart flashlight according to yet still another example embodiment. Based on the method provided by the above embodiments of the present disclosure, this embodiment is discussed by taking a process of activating the preset mode as an example. As shown in Fig. 6, the method may include followings.

At step 601, it is determined whether a current time reaches a preset time.

At step 602, when the current time reaches the preset time, the preset mode is activated.

In an embodiment, the preset time is set in the smart flashlight, which is used for determining whether to activate the preset mode. For example, in summer, the daytime is long and it is late when getting dark, such that 20:00 may be set as the preset time. Thus, if the smart flashlight determines the current date is a day in summer, and the current time is beyond the preset time, the preset mode is activated automatically.

In this embodiment, by implementing acts 601-602, the smart flashlight may determine whether the current time is beyond the preset time, when the current time is beyond the preset time, the preset time is activated automatically without any operation from the user, which is highly intelligent and automatic.

Fig. 7 is a block diagram of an apparatus for controlling a smart flashlight according to an example embodiment. As shown in Fig. 7, the apparatus may include: a first determining module 710, a first reading module 720 and an illuminating module 730.

The first determining module 710 is configured to determine a present moving direction when the smart flashlight is in a preset mode.

The first reading module 720 is configured to read a pre-stored relationship between moving directions and illumination configurations to determine a present illumination configuration corresponding to the present moving direction determined by the first determining module 710.

The illuminating module 730 is configured to illuminate according to the present illumination configuration determined by the first reading module 720.

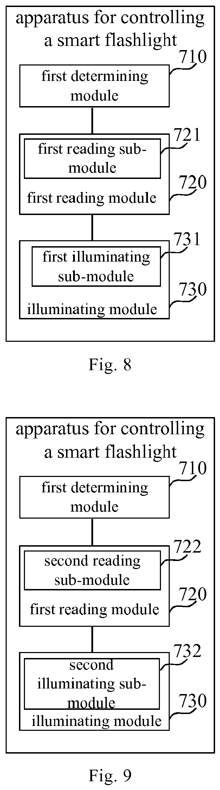

Fig. 8 is a block diagram of an apparatus for controlling a smart flashlight according to another example embodiment. As shown in Fig. 8, based on the embodiment shown in Fig. 7, in an embodiment, the first reading module 720 may include: a first reading sub-module 721, and the illuminating module 730 may include a first illuminating sub-module 731.

The first reading sub-module 721 is configured to read a pre-stored relationship between moving directions and colors of light to determine a color of light corresponding to the present moving direction.

The first illuminating sub-module 731 is configured to illuminate by adjusting a present color of light to the determined color of light.

Fig. 9 is a block diagram of an apparatus for controlling a smart flashlight according to yet another example embodiment. As shown in Fig. 9, based on the embodiment shown in Fig. 7, in an embodiment, the first reading module 720 may include: a second reading sub-module 722, and the illuminating module 730 may include a second illuminating sub-module 732.

The second reading sub-module 722 is configured to read a pre-stored relationship between moving directions and colors of light and a pre-stored relationship between moving directions and strobe frequencies to determine a color of light and a strobe frequency corresponding to the present moving direction.

The second illuminating sub-module 732 is configured to illuminate by adjusting a present color of light to the determined color of light and by using the determined strobe frequency.

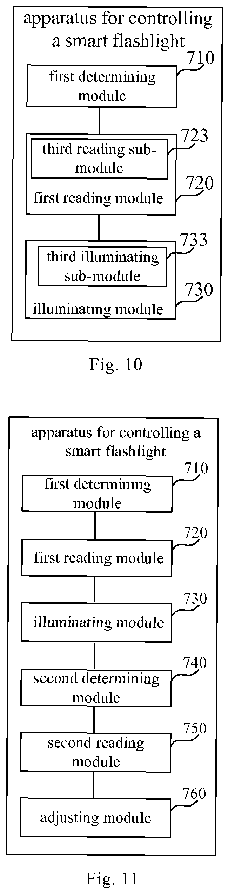

Fig. 10 is a block diagram of an apparatus for controlling a smart flashlight according to still another example embodiment. As shown in Fig. 10, based on the embodiment shown in Fig. 7, in an embodiment, the first reading module 720 may include: a third reading sub-module 723, and the illuminating module 730 may include a third illuminating sub-module 733.

The third reading sub-module 723 is configured to read pre-stored relationship between moving directions and colors of light and a pre-stored relationship between moving directions and light brightness to determine a color of light and a light brightness corresponding to the present moving direction.

The third illuminating sub-module 733 is configured to illuminate by adjusting a present color of light to the determined color of light and by adjusting a present light brightness to the determined light brightness.

Fig. 11 is a block diagram of an apparatus for controlling a smart flashlight according to yet still another example embodiment. As shown in Fig. 11, based on the embodiment shown in Fig. 7, in an embodiment, the apparatus may further include a second determining module 740, a second reading module 750 and an adjusting module 760.

The second determining module 740 is configured to determine a next moving direction when the moving direction is determined to deviate from the present moving direction.

The second reading module 750 is configured to read the pre-stored relationship between the moving directions and the illumination configurations to determine a next illumination configuration corresponding to the next moving direction determined by the second determining module 740.

The adjusting module 760 is configured to illuminate according to the next illumination configuration determined by the second reading module 750.

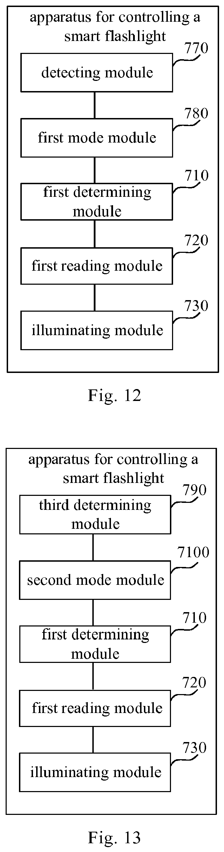

Fig. 12 is a block diagram of an apparatus for controlling a smart flashlight according to yet still another example embodiment. As shown in Fig. 12, based on the embodiment shown in Fig. 7, in an embodiment, the apparatus may further include a detecting module 770 and a first mode module 780.

The detecting module 770 is configured to detect an operation by a user of the smart device to select one of working modes of the smart device.

The first mode module 780 is configured to activate the preset mode when the operation detected by the detecting module 770 is performed for the preset mode.

Fig. 13 is a block diagram of an apparatus for controlling a smart flashlight according to yet still another example embodiment. As shown in Fig. 13, based on the embodiment shown in Fig. 7, in an embodiment, the apparatus may further include a third determining module 790 and a second mode module 7100.

The third determining module 790 is configured to determine whether a present time associated with the smart device reaches a preset time.

The second mode module 7100 is configured to activate the preset mode when the third determining module 790 determines the present time reaches the preset time.

With regard to the apparatus described in above embodiments, the specific manner in which each module executes is described in relative method embodiments, which will not be described in detail herein.

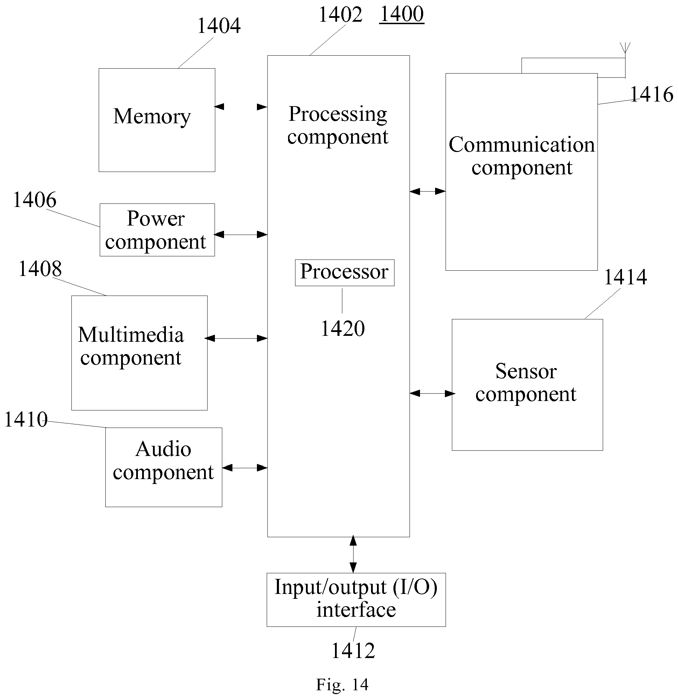

Fig. 14 is a block diagram of a control device applicable to a smart flashlight according to an example embodiment. For example, the apparatus 1400 may be a mobile phone, a computer, a digital broadcasting terminal, a message sending and receiving equipment, a game controller, a tablet device, a medical device, a fitness equipment, a personal digital assistant or the like.

Referring to Fig. 14, the apparatus 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the apparatus 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the apparatus 1400. Examples of such data include instructions for any applications or methods operated on the apparatus 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the apparatus 1400. The power component 1406 may include a power management system, one or more power sources, and any other components associated with the generation, management, and distribution of power in the apparatus 1400.

The multimedia component 1408 includes a screen providing an output interface between the apparatus 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the apparatus 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the apparatus 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the apparatus 1400. For instance, the sensor component 1414 may detect an open/closed status of the apparatus 1400, relative positioning of components, e.g., the display and the keypad, of the apparatus 1400, a change in position of the apparatus 1400 or a component of the apparatus 1400, a presence or absence of user contact with the apparatus 1400, an orientation or an acceleration/deceleration of the apparatus 1400, and a change in temperature of the apparatus 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the apparatus 1400 and other devices. The apparatus 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the apparatus 1400, for performing the above-described methods. For example, the non-transitory computer-readable storage medium may be a ROM, a RAM, a CD-ROM, a magnetic tape, a floppy disc, an optical data storage device, and the like.

The processor 1420 is configured to determine a current moving direction in a preset mode; read a pre-stored correspondence between a direction and an illuminating manner, and to determine an illuminating manner corresponding to the current moving direction; and illuminate in the illuminating manner determined.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

Other embodiments of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for controlling a smart flashlight, comprising:
determining (101) a present moving direction of the smart flashlight when the smart flashlight is in a preset mode;
reading (102) a pre-stored relationship between moving directions and illumination configurations from a memory of the smart flashlight to determine a present illumination configuration corresponding to the present moving direction, the illumination configurations comprising combinations of light wavelengths and strobe frequencies, different moving directions corresponding to different combinations of light wavelength and strobe frequency; and
illuminating (103) with the present illumination configuration in the present moving direction according to the present illumination configuration, wherein when said determined moving direction deviates, the present illumination configuration changes to prompt the user to adjust the moving direction,
**characterized in that** the method further comprises:
setting for each season of the year a corresponding preset time of day;
reading the current time and date associated with the smart flashlight;
determining (601) that the current date is within a season of said seasons of the year; and
when the current time is beyond the corresponding preset time of said determined season, activating (602) the preset mode automatically.

2. The method according to claim 1, wherein reading (102) a pre-stored relationship between moving directions and illumination configurations to determine a present illumination configuration corresponding to the present moving direction comprises:
reading (201) a pre-stored relationship between moving directions and colors of light to determine a color of light corresponding to the present moving direction; and
illuminating (103) according to the present illumination configuration comprises:
illuminating (202) by adjusting a present color of light to the determined color of light.

3. The method according to claim 1, wherein reading (102) a pre-stored relationship between moving directions and illumination configurations to determine a present illumination configuration corresponding to the present moving direction comprises:
reading (301) a pre-stored relationship between moving directions and colors of light and a pre-stored relationship between moving directions and strobe frequencies to determine a color of light and a strobe frequency corresponding to the present moving direction; and
illuminating (103) according to the present illumination configuration comprises:
illuminating (302) by adjusting a present color of light to the determined color of light and by using the determined strobe frequency.

4. The method according to claim 1, wherein reading (102) a pre-stored relationship between moving directions and illumination configurations to determine a present illumination configuration corresponding to the present moving direction comprises:
reading (401) a pre-stored relationship between moving directions and colors of light and a pre-stored relationship between moving directions and light brightness to determine a color of light and a light brightness corresponding to the present moving direction; and
illuminating (103) according to the present illumination configuration comprises:
illuminating (402) by adjusting a present color of light to the determined color of light and by adjusting a present light brightness to the determined light brightness.

5. The method according to claim 1, further comprising:
when the moving direction is determined to deviate from the present moving direction, determining a next moving direction;
reading the pre-stored relationship between the moving directions and the illumination configurations to determine a next illumination configuration corresponding to the next moving direction; and
illuminating according to the next illumination configuration.

6. The method according to claim 1, further comprising:
Detecting (501) an operation by a user of the smart flashlight to select one of working modes of the smart flashlight; and
when the one of working modes is the preset mode, activating (502) the preset mode.

7. A device for controlling a smart flashlight, comprising:
a first determining module (710), configured to determine a present moving direction of the smart flashlight when the smart flashlight is in a preset mode;
a first reading module (720), configured to read a pre-stored relationship between moving directions and illumination configurations from a memory of the smart flashlight to determine a present illumination configuration corresponding to the present moving direction, the illumination configurations comprising combinations of light wavelengths and strobe frequencies, different moving directions corresponding to different combinations of light wavelength and strobe frequency; and
an illuminating module (730), configured to illuminate with the present illumination configuration in the present moving direction according to the present illumination configuration, wherein when said determined moving direction deviates, the present illumination configuration changes to prompt the user to adjust the moving direction,
**characterized in that** the device further comprises:
a third determining module (790), configured to set for each season of the year a corresponding preset time of day, to read the current time and date associated with the smart flashlight, and to determine that the current date is within a season of said seasons of the year; and
a second mode module (7100), configured to activate the preset mode automatically when the current time is beyond the corresponding preset time of said determined season.

8. The device according to claim 7, wherein the first reading module (720) comprises:
a first reading sub-module (721), configured to read a pre-stored relationship between moving directions and colors of light to determine a color of light corresponding to the present moving direction; and
the illuminating module (730) comprises:
a first illuminating sub-module (731), configured to illuminate by adjusting a present color of light to the determined color of light.

9. The device according to claim 7, wherein the first reading module (720) comprises:
a second reading sub-module (722), configured to read a pre-stored relationship between moving directions and colors of light and a pre-stored relationship between moving directions and strobe frequencies to determine a color of light and a strobe frequency corresponding to the present moving direction; and
the illuminating module (730) comprises:
a second illuminating sub-module (732), configured to illuminate by adjusting a present color of light to the determined color of light and by using the determined strobe frequency.

10. The device according to claim 7, wherein the first reading module (720) comprises:
a third reading sub-module (723), configured to read pre-stored relationship between moving directions and colors of light and a pre-stored relationship between moving directions and light brightness to determine a color of light and a light brightness corresponding to the present moving direction; and
the illuminating module (730) comprises:
a third illuminating sub-module (733), configured to illuminate by adjusting a present color of light to the determined color of light and by adjusting a present light brightness to the determined light brightness.

11. The device according to claim 7, wherein further comprising:
a second determining module (740), configured to determine a next moving direction when the moving direction is determined to deviate from the present moving direction;
a second reading module (750), configured to read the pre-stored relationship between the moving directions and the illumination configurations to determine a next illumination configuration corresponding to the next moving direction; and
an adjusting module (760), configured to illuminate according to the next illumination configuration.

12. The device according to claim 7, further comprising:
a detecting module (770), configured to detect an operation by a user of the smart flashlight to select one of working modes of the smart flashlight; and
a first mode module (780), configured to activate the preset mode when the one of working modes is the preset mode.

13. A computer readable storage medium having computer programs stored thereon, wherein the computer programs are executed to perform the method according to any one of claims 1-6. when run on a device according to a corresponding apparatus claim 7-12.

## Patentansprüche

1. Verfahren zur Steuerung einer intelligenten Taschenlampe, wobei das Verfahren aufweist:
das Bestimmen (101) einer aktuellen Bewegungsrichtung der intelligenten Taschenlampe, wenn die intelligente Taschenlampe sich in einem voreingestellten Modus befindet;
das Lesen (102) einer vorab gespeicherten Beziehung zwischen Bewegungsrichtungen und Beleuchtungskonfigurationen aus einem Speicher der intelligenten Taschenlampe, um eine aktuelle Beleuchtungskonfiguration zu bestimmen, die der aktuellen Bewegungsrichtung entspricht, wobei die Beleuchtungskonfigurationen Kombinationen von Lichtwellenlängen und Blitzfrequenzen aufweisen, wobei verschiedene Bewegungsrichtungen verschiedenen Kombinationen aus Lichtwellenlänge und Blitzfrequenz entsprechen; und
das Beleuchten (103) mit der vorliegenden Beleuchtungskonfiguration in der aktuellen Bewegungsrichtung entsprechend der aktuellen Beleuchtungskonfiguration, wobei, wenn die bestimmte Bewegungsrichtung abweicht, die aktuelle Beleuchtungskonfiguration sich ändert, um den Benutzer zu veranlassen, die Bewegungsrichtung anzupassen,
**dadurch gekennzeichnet, dass** das Verfahren ferner aufweist:
das Einstellen einer entsprechenden voreingestellten Tageszeit für jede Jahreszeit;
das Lesen der aktuellen Zeit und des aktuellen Datums, die der intelligenten Taschenlampe zugeordnet sind;
das Feststellen (601), dass das aktuelle Datum innerhalb einer Jahreszeit der Jahreszeiten eines Jahres liegt; und
wenn die aktuelle Zeit jenseits der entsprechenden voreingestellten Zeit der festgestellten Jahreszeit der Jahreszeiten des Jahres liegt, das automatische Aktivieren (602) des voreingestellten Modus.

2. Verfahren nach Anspruch 1, bei welchem das Lesen (102) einer vorab gespeicherten Beziehung zwischen Bewegungsrichtungen und Beleuchtungskonfigurationen zum Bestimmen einer aktuellen Beleuchtungskonfiguration, die der aktuellen Bewegungsrichtung entspricht, aufweist:
das Lesen (200) einer vorab gespeicherten Beziehung zwischen Bewegungsrichtungen und Lichtfarben, um eine Lichtfarbe zu bestimmen, die der aktuellen Bewegungsrichtung entspricht; und
wobei das Beleuchten (103) gemäß der vorliegenden Beleuchtungskonfiguration aufweist:
das Beleuchten (202) durch Einstellen einer aktuellen Lichtfarbe auf die bestimmte Lichtfarbe.

3. Verfahren nach Anspruch 1, bei welchem das Lesen (102) einer vorab gespeicherten Beziehung zwischen Bewegungsrichtungen und Beleuchtungskonfigurationen zum Bestimmen einer aktuellen Beleuchtungskonfiguration, die der aktuellen Bewegungsrichtung entspricht, aufweist:
das Lesen (301) einer vorab gespeicherten Beziehung zwischen Bewegungsrichtungen und Lichtfarben und einer vorgespeicherten Beziehung zwischen Bewegungsrichtungen und Blitzfrequenzen zum Bestimmen einer Lichtfarbe und einer Blitzfrequenz, die der aktuellen Bewegungsrichtung entsprechen; und
wobei das Beleuchten (103) gemäß der vorliegenden Beleuchtungskonfiguration aufweist:
das Beleuchten (302) durch Einstellen einer aktuellen Lichtfarbe auf die bestimmte Lichtfarbe und durch Verwenden der bestimmten Blitzfrequenz.

4. Verfahren nach Anspruch 1, bei welchem das Lesen (102) einer vorab gespeicherten Beziehung zwischen Bewegungsrichtungen und Beleuchtungskonfigurationen zum Bestimmen einer aktuellen Beleuchtungskonfiguration, die der aktuellen Bewegungsrichtung entspricht, aufweist:
das Lesen (401) einer vorab gespeicherten Beziehung zwischen Bewegungsrichtungen und Lichtfarben und einer vorab gespeicherten Beziehung zwischen Bewegungsrichtungen und Lichthelligkeit zum Bestimmen einer Lichtfarbe und einer Lichthelligkeit, die der aktuellen Bewegungsrichtung entsprechen; und
wobei das Beleuchten (103) gemäß der vorliegenden Beleuchtungskonfiguration aufweist:
das Beleuchten (402) durch Einstellen einer aktuellen Lichtfarbe auf die bestimmte Lichtfarbe und durch Einstellen einer aktuellen Lichthelligkeit auf die bestimmte Lichthelligkeit.

5. Verfahren nach Anspruch 1, ferner aufweisend:
wenn bestimmt wird, dass die Bewegungsrichtung von der aktuellen Bewegungsrichtung abweicht, Bestimmen einer nächsten Bewegungsrichtung;
das Lesen der vorab gespeicherten Beziehung zwischen den Bewegungsrichtungen und den Beleuchtungskonfigurationen zum Bestimmen einer nächsten Beleuchtungskonfiguration die der nächsten Bewegungsrichtung entspricht; und
das Beleuchten entsprechend der nächsten Beleuchtungskonfiguration.

6. Verfahren nach 1, ferner aufweisend:
das Erkennen (501) einer Operation durch einen Benutzer der intelligenten Taschenlampe, um einen der Arbeitsmodi der intelligenten Taschenlampe auszuwählen; und
wenn der eine der Arbeitsmodi der voreingestellte Modus ist, der voreingestellte Modus aktiviert wird (502).

7. Vorrichtung zum Steuern einer intelligenten Taschenlampe, welche aufweist:
ein erstes Bestimmungsmodul (710), das dazu ausgebildet ist, eine aktuelle Bewegungsrichtung der intelligenten Taschenlampe zu bestimmen, wenn die intelligente Taschenlampe sich in einem voreingestellten Modus befindet;
ein erstes Lesemodul (720), das dazu ausgebildet ist, eine vorab gespeicherte Beziehung zwischen Bewegungsrichtungen und Beleuchtungskonfigurationen aus einem Speicher der intelligenten Taschenlampe zu lesen, um eine aktuelle Beleuchtungskonfiguration zu bestimmen, die der aktuellen Bewegungsrichtung entspricht, wobei die Beleuchtungskonfigurationen Kombinationen von Lichtwellenlängen und Blitzfrequenzen aufweisen, wobei verschiedene Bewegungsrichtungen verschiedenen Kombinationen aus Lichtwellenlänge und Blitzfrequenz entsprechen; und
ein Beleuchtungsmodul (730), das dazu ausgebildet ist, mit der aktuellen Beleuchtungskonfiguration in der aktuellen Bewegungsrichtung gemäß der vorliegenden Beleuchtungskonfiguration zu leuchten, wobei, wenn die bestimmte Bewegungsrichtung abweicht, die aktuelle Beleuchtungskonfiguration sich ändert, um den Benutzer zu veranlassen, die Bewegungsrichtung einzustellen,
**dadurch gekennzeichnet, dass** die Vorrichtung ferner aufweist:
ein drittes Bestimmungsmodul (790), das dazu ausgebildet ist, für jede Jahreszeit eines Jahres eine entsprechende voreingestellte Tageszeit einzustellen, die aktuelle Zeit und das aktuelle Datum, die der intelligenten Taschenlampe zugeordnet sind, zu lesen und festzustellen, dass das aktuelle Datum innerhalb einer Jahreszeit der Jahreszeiten eines Jahres liegt; und
ein zweites Modusmodul (7100), das dazu ausgebildet ist, den voreingestellten Modus automatisch zu aktivieren, wenn die aktuelle Zeit jenseits der entsprechenden voreingestellten Zeit der bestimmten Jahreszeit liegt.

8. Vorrichtung nach Anspruch 7, bei welcher das erste Lesemodul (720) aufweist:
ein erstes Lese-Submodul (721), das dazu ausgebildet ist, eine vorab gespeicherte Beziehung zwischen Bewegungsrichtungen und Lichtfarben zu lesen, um eine Lichtfarbe zu bestimmen, die der aktuellen Bewegungsrichtung entspricht; und
wobei das Beleuchtungsmodul (730) aufweist:
ein erstes Beleuchtungs-Submodul, das dazu ausgebildet ist, zu beleuchten, indem es eine aktuelle Lichtfarbe an die bestimmte Lichtfarbe anpasst.

9. Vorrichtung nach Anspruch 7, bei welcher das erste Lesemodul (720) aufweist:
ein zweites Lese-Submodul (722), das dazu ausgebildet ist, eine vorab gespeicherte Beziehung zwischen Bewegungsrichtungen und Lichtfarben und eine vorab gespeicherte Beziehung zwischen Bewegungsrichtungen und Blitzfrequenzen zu lesen, um eine Lichtfarbe und eine Blitzfrequenz zu bestimmen, die der aktuellen Bewegungsrichtung entsprechen; und
wobei das Beleuchtungsmodul (730) aufweist:
ein zweites Beleuchtungs-Submodul (732), das dazu ausgebildet ist, zu beleuchten, indem es eine aktuelle Lichtfarbe an die bestimmte Lichtfarbe anpasst und indem es die bestimmte Blitzfrequenz verwendet.

10. Vorrichtung nach Anspruch 7, bei welcher das erste Lesemodul (720) aufweist:
ein drittes Lese-Submodul (723), das dazu ausgebildet ist, eine vorab gespeicherte Beziehung zwischen Bewegungsrichtungen und Lichtfarben und eine vorab gespeicherte Beziehung zwischen Bewegungsrichtungen und Lichthelligkeit zu lesen, um eine Lichtfarbe und eine Lichthelligkeit zu bestimmen, die der aktuellen Bewegungsrichtung entsprechen; und
wobei das Beleuchtungsmodul (730) aufweist:
ein drittes Beleuchtungs-Submodul (733), das dazu ausgebildet ist, zu beleuchten, indem es eine aktuelle Lichtfarbe auf die bestimmte Lichtfarbe einstellt und indem es eine aktuelle Lichthelligkeit auf die bestimmte Lichthelligkeit einstellt.

11. Vorrichtung nach Anspruch 7, ferner aufweisend:
ein zweites Bestimmungsmodul (740), das dazu ausgebildet ist, eine nächste Bewegungsrichtung zu bestimmen, wenn festgestellt wird, dass die Bewegungsrichtung von der aktuellen Bewegungsrichtung abweicht;
ein zweites Lesemodul (750), das dazu ausgebildet ist, die vorab gespeicherte Beziehung zwischen den Bewegungsrichtungen und den Beleuchtungskonfigurationen zu lesen, um eine nächste Beleuchtungskonfiguration zu bestimmen, die der nächsten Bewegungsrichtung entspricht; und
ein Einstellmodul (760), das dazu ausgebildet ist, entsprechend der nächsten Beleuchtungskonfiguration zu leuchten.

12. Vorrichtung nach Anspruch 7, ferner aufweisend:
ein Erfassungsmodul (770), das dazu ausgebildet ist, eine Operation eines Benutzers der intelligenten Taschenlampe zu erfassen, um einen der Arbeitsmodi der intelligenten Taschenlampe auszuwählen; und
ein erstes Modus-Modul (780), das dazu ausgebildet ist, den voreingestellten Modus zu aktivieren, wenn der eine der Arbeitsmodi der voreingestellte Modus ist.

13. Computerlesbares Speichermedium mit darauf gespeicherten Computerprogrammen, wobei die Computerprogramme ausgeführt werden, um das Verfahren nach einem der Ansprüche 1-6 durchzuführen, wenn es auf einer Vorrichtung nach einem entsprechenden Vorrichtungsansprüche 7-12 ausgeführt wird.

## Revendications

1. Procédé permettant de commander une lampe de poche intelligente, comprenant le fait de:
déterminer (101) une direction de déplacement actuelle de la lampe de poche intelligente lorsque la lampe de poche intelligente se trouve dans un mode préétabli;
lire (102) un rapport pré-mémorisé entre les directions de déplacement et les configurations d'éclairage d'une mémoire de la lampe de poche intelligente pour déterminer une configuration d'éclairage actuelle correspondant à la direction de déplacement actuelle, les configurations d'éclairage comprenant des combinaisons de longueurs d'onde de lumière et de fréquence stroboscopique, différentes directions de déplacement correspondant à différentes combinaisons de longueur d'onde de lumière et de fréquence stroboscopique; et
éclairer (103) par la configuration d'éclairage actuelle dans la direction de déplacement actuelle selon la configuration d'éclairage actuelle, où, lorsque ladite direction de déplacement déterminée se dévie, la configuration d'éclairage actuelle change pour inviter l'utilisateur à ajuster la direction de déplacement,
**caractérisé en ce que** le procédé comprend par ailleurs le fait de:
régler pour chaque saison de l'année une heure du jour préétablie correspondante;
lire l'heure et la date actuelles associées à la lampe de poche intelligente;
déterminer (601) que la date actuelle se situe dans une saison parmi lesdites saisons de l'année; et
lorsque l'heure actuelle se situe au-delà de l'heure préétablie correspondante de ladite saison déterminée, activer (602) automatiquement le mode préétabli.

2. Procédé selon la revendication 1, dans lequel la lecture (102) d'un rapport pré-mémorisé entre les directions de déplacement et les configurations d'éclairage pour déterminer une configuration d'éclairage actuelle correspondant à la direction de déplacement actuelle comprend le fait de:
lire (201) un rapport pré-mémorisé entre les directions de déplacement et les couleurs de lumière pour déterminer une couleur de lumière correspondant à la direction de déplacement actuelle; et
l'éclairage (103) selon la configuration d'éclairage actuelle comprend le fait de:
éclairer (202) en ajustant une couleur de lumière actuelle à la couleur de lumière déterminée.

3. Procédé selon la revendication 1, dans lequel la lecture (102) d'un rapport pré-mémorisé entre les directions de déplacement et les configurations d'éclairage pour déterminer une configuration d'éclairage actuelle correspondant à la direction de déplacement actuelle comprend le fait de:
lire (301) un rapport pré-mémorisé entre les directions de déplacement et les couleurs de lumière et un rapport pré-mémorisé entre des directions de déplacement et les fréquences stroboscopiques pour déterminer une couleur de lumière et une fréquence stroboscopique correspondant à la direction de déplacement actuelle; et
l'éclairage (103) selon la configuration d'éclairage actuelle comprend le fait de:
éclairer (302) en ajustant une couleur de lumière actuelle à la couleur de lumière déterminée et en utilisant la fréquence stroboscopique déterminée.

4. Procédé selon la revendication 1, dans lequel la lecture (102) d'un rapport pré-mémorisé entre les directions de déplacement et les configurations d'éclairage pour déterminer une configuration d'éclairage actuelle correspondant à la direction de déplacement actuelle comprend le fait de:
lire (401) un rapport pré-mémorisé entre les directions de déplacement et les couleurs de lumière et un rapport pré-mémorisé entre les directions de déplacement et la luminosité pour déterminer une couleur de lumière et une luminosité correspondant à la direction de déplacement actuelle; et
l'éclairage (103) selon la configuration d'éclairage actuelle comprend le fait de:
éclairer (402) en ajustant une couleur de lumière actuelle à la couleur de lumière déterminée et en ajustant une luminosité actuelle à la luminosité déterminée.

5. Procédé selon la revendication 1, comprenant par ailleurs le fait de:
lorsqu'il est déterminé que la direction de déplacement se dévie de la direction de déplacement actuelle, déterminer une direction de déplacement suivante;
lire le rapport pré-mémorisé entre les directions de déplacement et les configurations d'éclairage pour déterminer une configuration d'éclairage suivante correspondant à la direction de déplacement suivante; et
éclairer selon la configuration d'éclairage suivante.

6. Procédé selon la revendication 1, comprenant par ailleurs le fait de:
détecter (501) une opération par un utilisateur de la lampe de poche intelligente pour sélectionner l'un des modes de fonctionnement de la lampe de poche intelligente; et
lorsque l'un des modes de fonctionnement est le mode préétabli, activer (502) le mode préétabli.

7. Dispositif permettant de commander une lampe de poche intelligente, comprenant:
un premier module de détermination (710) configuré pour déterminer une direction de déplacement actuelle de la lampe de poche intelligente lorsque la lampe de poche intelligente se trouve dans un mode préétabli;
un premier module de lecture (720) configuré pour lire un rapport pré-mémorisé entre les directions de déplacement et les configurations d'éclairage d'une mémoire de la lampe de poche intelligente pour déterminer une configuration d'éclairage actuelle correspondant à la direction de déplacement actuelle, les configurations d'éclairage comprenant des combinaisons de longueurs d'onde de lumière et de fréquences stroboscopiques, différentes directions de déplacement correspondant à différentes combinaisons de longueur d'onde de lumière et de fréquence stroboscopique; et
un module d'éclairage (730) configuré pour éclairer par la configuration d'éclairage actuelle dans la direction de déplacement actuelle selon la configuration d'éclairage actuelle, où, lorsque ladite direction de déplacement déterminée se dévie, la configuration d'éclairage actuelle change pour inviter l'utilisateur à ajuster la direction de déplacement,
**caractérisé par le fait que** le dispositif comprend par ailleurs:
un troisième module de détermination (790) configuré pour régler pour chaque saison de l'année une heure du jour préétablie correspondante, pour lire l'heure et la date actuelles associées à la lampe de poche intelligente, et pour déterminer que la date actuelle se situe dans une saison parmi lesdites saisons de l'année; et
un deuxième module de mode (7100) configuré pour activer automatiquement le mode préétabli lorsque l'heure actuelle se situe au-delà de l'heure préétablie correspondante de ladite saison déterminée.

8. Dispositif selon la revendication 7, dans lequel le premier module de lecture (720) comprend:
un premier sous-module de lecture (721) configuré pour lire un rapport pré-mémorisé entre les directions de déplacement et les couleurs de lumière pour déterminer une couleur de lumière correspondant à la direction de déplacement actuelle; et
le module d'éclairage (730) comprend:
un premier sous-module d'éclairage (731) configuré pour éclairer en ajustant une couleur de lumière actuelle à la couleur de lumière déterminée.

9. Dispositif selon la revendication 7, dans lequel le premier module de lecture (720) comprend:
un deuxième sous-module de lecture (722) configuré pour lire un rapport pré-mémorisé entre les directions de déplacement et les couleurs de lumière et un rapport pré-mémorisé entre les directions de déplacement et les fréquences stroboscopiques pour déterminer une couleur de lumière et une fréquence stroboscopique correspondant à la direction de déplacement actuelle; et
le module d'éclairage (730) comprend:
un deuxième sous-module d'éclairage (732) configuré pour éclairer en ajustant une couleur de lumière actuelle à la couleur de lumière déterminée et en utilisant la fréquence stroboscopique déterminée.

10. Dispositif selon la revendication 7, dans lequel le premier module de lecture (720) comprend:
un troisième sous-module de lecture (723) configuré pour lire un rapport pré-mémorisé entre les directions de déplacement et les couleurs de lumière et un rapport pré-mémorisé entre les directions de déplacement et la luminosité pour déterminer une couleur de lumière et une luminosité correspondant à la direction de déplacement actuelle; et
le module d'éclairage (730) comprend:
un troisième sous-module d'éclairage (733) configuré pour éclairer en ajustant une couleur de lumière actuelle à la couleur de lumière déterminée et en ajustant une luminosité actuelle à la luminosité déterminée.

11. Dispositif selon la revendication 7, comprenant par ailleurs:
un deuxième module de détermination (740) configuré pour déterminer une direction de déplacement suivante lorsqu'il est déterminé que la direction de déplacement se dévie de la direction de déplacement actuelle;
un deuxième module de lecture (750) configuré pour lire le rapport pré-mémorisé entre les directions de déplacement et les configurations d'éclairage pour déterminer une configuration d'éclairage suivante correspondant à la direction de déplacement suivante; et
un module de réglage (760) configuré pour éclairer selon la configuration d'éclairage suivante.

12. Dispositif selon la revendication 7, comprenant par ailleurs:
un module de détection (770) configuré pour détecter une opération par un utilisateur de la lampe de poche intelligente pour sélectionner l'un des modes de fonctionnement de la lampe de poche intelligente; et
un premier module de mode (780) configuré pour activer le mode préétabli lorsque l'un des modes de fonctionnement est le mode préétabli.

13. Support de mémoire lisible par ordinateur présentant, y mémorisés, des programmes d'ordinateur, dans lequel les programmes d'ordinateur sont exécutés pour réaliser le procédé selon l'une quelconque des revendications 1 à 6 lorsqu'ils sont exécutés sur un dispositif selon l'une des revendications d'appareil 7 à 12 correspondante.
